# EUROPEAN PATENT SPECIFICATION

(11) **EP 0 328 665 B1**
(45) Date of publication and mention of the grant of the patent: **13.09.1995**
(21) Application number: 88906119.8
(22) Date of filing: 21.07.1988
(51) Int. Cl.: G05B 19/4093

(54) **NUMERICAL CONTROLLER**
NUMERISCHE STEUERUNG
CIRCUIT DE COMMANDE NUMERIQUE

(30) Priority: 21.07.1987 JP 181669/87
(43) Date of publication of application: 23.08.1989
(73) Proprietor: FANUC LTD., Minamitsuru-gun, Yamanashi 401-05 (JP)
(72) Inventor: SASAKI, Takao, Hachioji-shi Tokyo 193 (JP)
(74) Representative: Billington, Lawrence Emlyn
(86) International application number: PCT/JP88/00735
(87) International publication number: WO 89/00724

(56) References cited:
- EP-A- 0 091 663
- JP-A- 5 972 510
- JP-A-51 110 182
- JP-A-62 189 506
- US-A- 3 909 923
- US-A- 4 511 975
- PATENT ABSTRACTS OF JAPAN, vol. 10, no. 64, (P-436)(2121) 14 March 1986 & JP-A-60 205 607 ( MITSUBISHI ) 17 October 1985

## Description

### Technical Field

This invention relates to a numerical control apparatus in which it is possible to control the start of execution of machine-side operations such as M, S, T and B functions.

### Background Art

With a numerical control apparatus for controlling a machine tool upon decoding an ordinary NC command, there are two ways to execute commands in a case where a movement command and an operation command are issued from the same block. Specifically, there is a method in which execution of a tool movement command starts at the same time as execution of an operation command, and a method in which the operation command is executed after execution of the movement command.

As to which method is used to control the machine tool by the NC commands, one or the other is selected depending upon the particulars of the operation performed by the machine tool. For example, among commands based on M codes (auxiliary function codes), the operation command is outputted to the machine side using the former method with regard to M03, M04 and M05 (control for rotating and stopping a spindle) and the latter method with regard to M20 and M21.

When an NC command for drilling a plurality of holes in a workpiece is delivered to the machine tool in this conventional numerical control apparatus, a movement command for moving the tool to a predetermined position on the workpiece and a command for the drilling operation at this position are read in the numerical control apparatus from the same data block, and the operation of the machine tool is controlled upon decoding these commands. If the former of the two methods mentioned above is adopted as this command execution function, it is required that a coolant be supplied by a coolant start command executed at the same time that the tool is moved. If a long period of time is required to move the tool, coolant is wasted correspondingly. If the latter method is adopted, on the other hand, start of coolant supply is commanded at the end of tool movement in response to the movement command. When this is done, however, a time delay due to an exchange of signals between the numerical control apparatus and the machine tool is involved before the supply of coolant starts, and a great deal of time is wasted in the overall machining operation particularly in a case where the tool traveling distance on the workpiece is short.

In order to solve this problem which arises owing to the relationship between tool movement and the operation commanded on the machine side, in the prior art the traveling distance commanded at the same time as the operation command on the machine side is limited to a fixed value, the distance required is commanded by being split between two data blocks, and the tool is moved by executing these commands in succession. Yet even in this case there is no essential solution to the problem; all that is done is to make the NC commands more complicated and place an extra burden upon the operator.

EP-A-0 091 663 discloses an apparatus for controlling operation of an industrial robot, in which a robot arm carries an actuator, and the actuator is actuated prior to completion of a movement by the robot arm. A prescribed position, ahead of the final destination of the arm, is stored in a memory and compared with a detected current position of the arm. When the arm reaches the prescribed position, a position completion signal is issued irrespective of arm movement and the actuator is activated.

According to the present invention, there is provided a numerical control apparatus having a command execution function in which a movement command and an operation command are outputted from an NC tape as NC commands of the same block, comprising:-
decoding means for reading out commands from the NC tape including the movement command and operation command, and decoding a dimension word associated with the movement command to determine a destination point of a tool;
strobe outputting means for outputting a strobe in response to the operation command;
control means for controlling movement of the tool towards said destination point based on said movement command;
pseudo-signal forming means for outputting a pseudo-movement completion signal when the tool reaches a predetermined stage of said movement, before completion thereof, at which said operation command is to be executed;
signal combining means for performing an AND operation upon said strobe and said pseudo-movement completion signal, and causing immediate decoding and execution of said operation command if the AND operation is satisfied before the tool reaches said destination point; and
means for outputting a movement completion signal (DEN.B) when the tool reaches said destination point;
wherein said predetermined stage is defined by an additional code inserted in said block, said decoding means decoding a numerical value associated with said additional code in order to determine the point at which said operation command is to be executed.

The invention may thus provide a numerical control apparatus having a command execution function for executing an operation command before completion of tool movement, in parallel with a function for executing an operation command at the end of a movement command. An operation command designated on the machine side is decoded by a pseudo-movement completion signal formed at any timing from start of execution of the movement command to completion of movement, with the operation command being executed before completion of tool movement.

The pseudo-movement completion signal is generated by using an additional code integrated into the block format of commands on an NC tape.

Reference is made, by way of example, to the accompanying drawings, in which:-
Fig. 1 is a block diagram illustrating an embodiment of the present invention;
Fig. 2 is an explanatory view illustrating an example of movement control;
Fig. 3 is an explanatory view illustrating timing of command execution control in the same embodiment;
Fig. 4 is an explanatory view illustrating timing in a case where an operation command is executed at the same time as a movement command; and
Fig. 5 is an explanatory view illustrating timing in a case where an operation command is executed at the end of movement.

An embodiment of the present invention will now be described in detail with reference to the drawings.

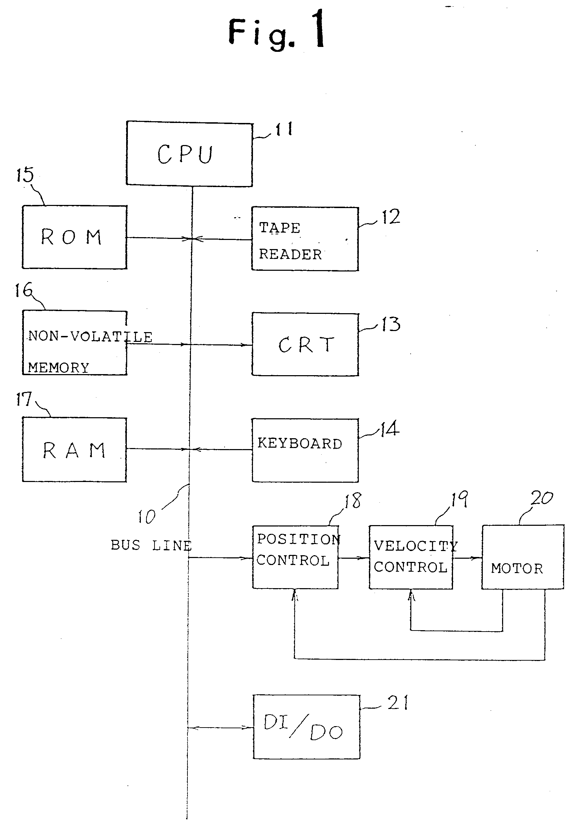

Fig. 1 is a block diagram illustrating an example of a numerical control apparatus for controlling an NC machine tool. A processing unit (CPU) 11 for forming command data for a machine tool is connected, via a bus line 10, to a tape reader 12 for reading NC commands from an NC tape, a CRT 13 serving as a display unit, and a keyboard 14 for performing data input manually as for the purpose of revising a program. Also connected to the CPU are a ROM 15 storing a control program for operating the system efficiently, and a non-volatile memory 16 for storing control programs by part for the purpose of milling and the like, as well as data necessary for machining.

Connected to the bus line 10 of CPU 11 is a writable RAM 17 used as a working memory for controlling a motor 20, which is for moving a tool along a predetermined axis, via position control means 18 and velocity control means 19. An input/output unit (DI/DO) 21 which exchanges operation control signals, for M, S, T and B functions and the like, with the machine side is connected to the machine tool directly or through a PMC or the like. Though the motor 20 illustrated in Fig. 1 is for one axis only, in actuality at least three motors, position control means and velocity control means each are provided in order to move and control the tool of the machine tool freely in three-dimensional space.

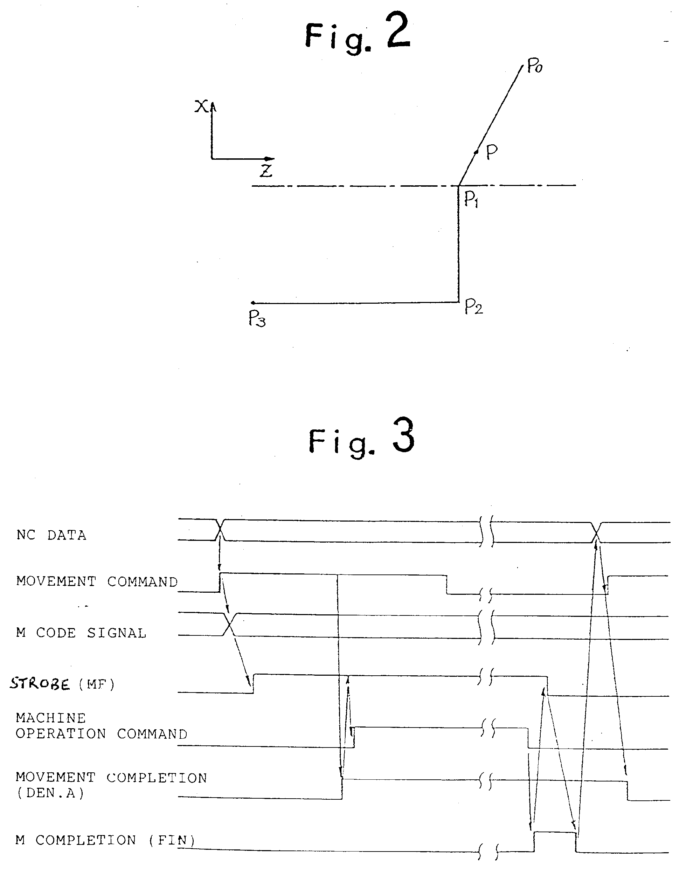

Fig. 2 illustrates the path of a tool moved from point Po to points P1, P2, P3 by NC data from the tape reader 12.

Various operations performed by the NC machine tool are expressed by the following variable block word address format in terms of the NC tape. Specifically, one block of data which commands one operation of the machine tool is composed of a plurality of words, and a word comprises an address indicating the meaning of a numerical value, and the numerical value following the address. For example, in a case where the tool is positioned from point Po to point P1, and the workpiece (the side below the one-dot chain line) is subjected to machining from point P2 to point P3, by the next data block, commands from the NC tape are executed at the timing shown in Fig. 3.

The format is as follows:$\text{Nl G91 G00 X -100.0 Z50.0 Q20 M07}$

Specifically, when a dimension word (X -100.0 Z50.0) which follows G00 indicative of the position function in the data block is read out, the CPU 11 outputs a predetermined movement command upon decoding the dimension word. Then, when the M-code signal is read out, the CPU outputs a strobe (MF), which is the code read command. In order to execute a coolant-on command issued in accordance with M07 when the tool arrives as a point intermediate the points Po, P1, a Q code is inserted between the positioning code G00 and M code in the abovementioned data block. This Q code, which has a numerical value following it that designates the remaining traveling distance 20 (mm) of the tool, specifies the point P at which the M function is to be executed. As a result, when the tool arrives at the point P, a pseudo-movement completion signal (DEN.A) is outputted. When this signal and the strobe (MF) satisfy an AND condition, the machine operation function is immediately executed.

Thus, even though a tool movement command and an operation command on the machine side are outputted as NC commands of the same data block, in the above-described numerical control apparatus the command for the machine operation is decoded after the tool is moved to a point a designated distance short of the workpiece. Therefore, the coolant-on command (M07) is executed after the tool arrives at a position a required distance short of the workpiece, and wasting of coolant can be eliminated.

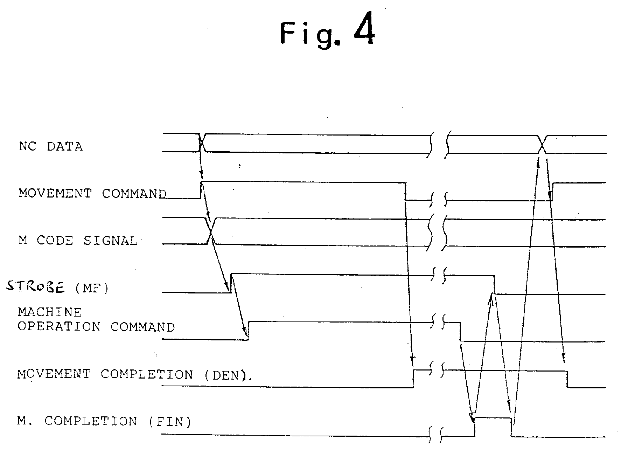

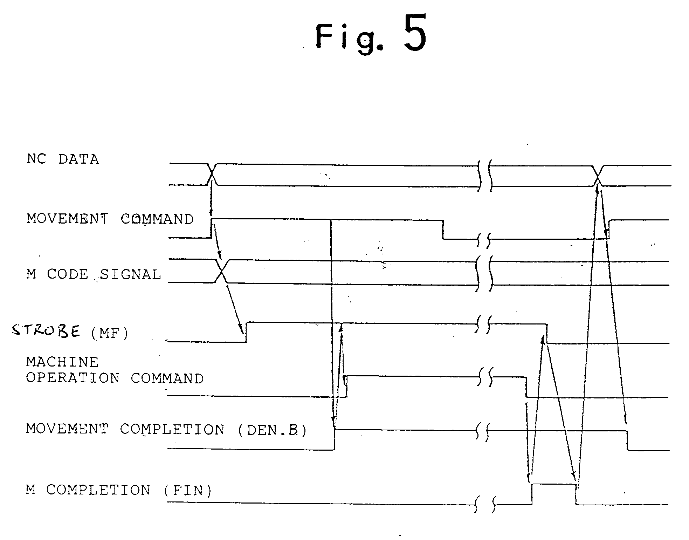

In a case where the distance between points Po and P1 is short, the M code can be executed at the same time that movement from point Po starts without the Q code being inserted, just as in the prior-art method. The timing chart of Fig. 4 illustrates timing for a case where an operation command is executed at the same time as a movement command. As shown in Fig. 5, it is also possible to adopt a set-up in which, depending upon the particulars of the operation command designated by the M code, a movement completion signal (DEN.B) formed at the moment movement ends is outputted, thereby starting operation on the machine side.

It should be noted that the timing at which the pseudo-movement completion signal (DEN.A) is generated in the above-described embodiment is set by designating the remaining traveling distance of the tool. However, in a case where the traveling velocity is set along with the G code (G00), it is preferred that the units of the numerical value following the Q code be changed to units of time.

In the above-described embodiment, a case is described in which the operation command on the machine side is issued by the auxiliary function code M. However, the invention can be applied in a similar manner even in a case where operation on the machine side is commanded by a spindle function S, tool function T or second auxiliary function B.

### Industrial Applicability

The numerical control apparatus of the present invention is such that an operation command on a machine side is executed at a predetermined timing before completion of tool movement, whereby control for starting execution of machine-side operations such as M, S, T and B functions can be performed without complicating NC commands and without placing an extra burden upon the operator.

## Claims

1. A numerical control apparatus having a command execution function in which a movement command (G) and an operation command (M) are outputted from an NC tape as NC commands of the same block, comprising:-
decoding means for reading out commands from the NC tape including the movement command (G) and operation command (M), and decoding a dimension word associated with the movement command to determine a destination point (P1) of a tool;
strobe outputting means for outputting a strobe (MF) in response to the operation command;
control means for controlling movement of the tool towards said destination point (P1) based on said movement command;
pseudo-signal forming means for outputting a pseudo-movement completion signal (DEN.A) when the tool reaches a predetermined stage (P) of said movement, before completion thereof, at which said operation command (M) is to be executed;
signal combining means for performing an AND operation upon said strobe (MF) and said pseudo-movement completion signal (DEN.A), and causing immediate decoding and execution of said operation command (M) if the AND operation is satisfied before the tool reaches said destination point (P1); and
means for outputting a movement completion signal (DEN.B) when the tool reaches said destination point (P1);
wherein said predetermined stage is defined by an additional code (Q) inserted in said block, said decoding means decoding a numerical value associated with said additional code in order to determine the point at which said operation command (M) is to be executed.

2. An apparatus according to claim 1, wherein said additional code (Q) defines said predetermined stage (P) of said movement command in accordance with a remaining movement distance before said tool reaches said destination point (P1).

3. An apparatus according to claim 1, wherein said additional code (Q) defines said predetermined stage (P) of said movement command in accordance with a remaining time before completion of said movement command.

4. An apparatus according to claim 2, wherein said block has the following block format:-
Naa G91 G00 Xxx Zzz Qnn Mmm
wherein Naa is the block address, G91 and G00 are G codes for positioning the tool, Xxx and Zzz constitute a dimension word associated with G00, Qnn is the additional code including said remaining movement distance nn, and Mmm is an M, S, T or B code defining the operation command; aa, xx, zz, nn and mm being integer values.

5. An apparatus according to any preceding claim, wherein said operation command (M) is a coolant-on command (M07).

## Patentansprüche

1. Numerische Steuerungsvorrichtung, die eine Befehlsausführfunktion aufweist, in der ein Bewegungskommando (G) und ein Betriebskommando (M) als NC-Befehle des gleichen Blocks von einem NC-Band ausgegeben werden, umfassend:
eine Decodiervorrichtung, geeignet zum Auslesen von Kommandos aus dem NC-Band einschließlich des Bewegungskommandos (G) und des Betriebskommandos (M), und zum Decodieren eines Wegworts, das zum Bewegungskommando gehört, um einen Bestimmungspunkt (P1) eines Werkzeugs festzulegen;
eine Impulsausgabevorrichtung, geeignet zum Ausgeben eines Impulses (MF) abhängig vom Betriebskommando;
eine Regelvorrichtung, geeignet zum Regeln der Bewegung des Werkzeugs hin zu seinem Bestimmungspunkt (P1) abhängig vom Bewegungskommando;
eine Pseudo-Signalformungsvorrichtung, geeignet zum Ausgeben eines Pseudo-Bewegung-Beendet-Signals (DEN.A), wenn das Werkzeug eine vorbestimmte Stufe (P) der Bewegung erreicht, bevor diese beendet ist, woraufhin das Betriebskommando (M) auszuführen ist;
eine Signalverknüpfungsvorrichtung, geeignet zum Ausführen einer AND-Verknüpfung des Impuls- (MF) und des Pseudo-Bewegung-Beendet-Signals (DEN.A), und dazu, das sofortige Decodieren und Ausführen des Betriebskommandos (M) zu bewirken, falls die AND-Verknüpfung erfüllt ist, bevor das Werkzeug seinen Bestimmungspunkt (P1) erreicht; und
eine Vorrichtung, geeignet zum Ausgeben eines Bewegung-Beendet-Signals (DEN.B), wenn das Werkzeug seinen Bestimmungspunkt (P1) erreicht,
wobei die vorab festgelegte Stufe durch einen zusätzlichen, in den Block eingefügten Code (Q) bestimmt wird und die Decodiervorrichtung einen numerischen Wert decodiert, der zum zusätzlichen Code gehört, um den Punkt zu bestimmen, an dem das Betriebskommando (M) auszuführen ist.

2. Vorrichtung nach Anspruch 1, wobei der zusätzliche Code (Q) die vorbestimmte Stufe (P) des Bewegungskommandos gemäß einer verbleibenden Bewegungsstrecke bestimmt, bevor das Werkzeug den Bestimmungspunkt (P1) erreicht.

3. Vorrichtung nach Anspruch 1, wobei der zusätzliche Code (Q) die vorbestimmte Stufe (P) des Bewegungskommandos gemäß einer verbleibenden Zeitspanne bestimmt, bevor das Bewegungskommando abgeschlossen ist.

4. Vorrichtung nach Anspruch 2, wobei der Block das folgende Blockformat aufweist:
Naa G91 G00 Xxx Zzz Qnn Mmm
wobei Naa die Blockadresse ist, G91 und G00 G-Codes zum Werkzeugpositionieren sind, Xxx und Zzz ein Wegwort bilden, das zu G00 gehört, Qnn der Zusatzcode ist, der die verbleibende Bewegungsentfernung nn enthält, und Mmm ein M-, S-, T- oder B-Code ist, der das Betriebskommando bestimmt; aa, xx, zz, nn und mm sind dabei ganzzahlige Werte.

5. Vorrichtung nach irgendeinem vorhergehenden Anspruch, wobei das Betriebskommando (M) ein Kühlmittel-Ein-Befehl (M07) ist.

## Revendications

1. Un appareil de commande numérique présentant une fonction d'exécution d'instructions dans lequel une instruction de déplacement (G) et une instruction de fonctionnement (M) sont délivrées à partir d'une bande à commande numérique en tant qu'instructions de commande numérique du même bloc, comprenant :
des moyens de décodage pour extraire par lecture des instructions sur une bande à commande numérique comprenant l'instruction de déplacement (G) et l'instruction de fonctionnement (M), et décodant un mot de dimension associé à l'instruction de déplacement pour déterminer un point de destination (P1) d'un outil ;
des moyens de délivrance de traces pour délivrer une trace (MF) en réponse à une instruction de fonctionnement ;
des moyens de commande pour commander le déplacement de l'outil en direction dudit point de destination (P1) sur la base de ladite instruction de déplacement ;
des moyens de formation de pseudo signaux afin de délivrer un signal d'achèvement de pseudo déplacement (DEN.A) quand l'outil atteint un stade prédéterminé (P) dudit déplacement, avant son achèvement, point auquel ladite instruction de fonctionnement (M) doit être exécutée ;
des moyens de combinaison de signaux pour effectuer une opération ET sur ladite trace (MF) et ledit signal d'achèvement de pseudo déplacement (DEN.A), et amenant un décodage immédiat et une exécution de ladite instruction de fonctionnement (M) si l'opération ET est satisfaite avant que l'outil atteigne ledit point de destination (P1) ; et
des moyens pour délivrer un signal d'achèvement de déplacement (DEN.B) lorsque l'outil atteint ledit point de destination (P1) ;
dans lequel ledit stade prédéterminé est défini par un code supplémentaire (Q) inséré dans ledit bloc, lesdits moyens de décodage décodant une valeur numérique associée audit code supplémentaire de manière à déterminer le point auquel doit être exécutée ladite instruction de fonctionnement (M).

2. Un appareil selon la revendication 1, dans lequel ledit code supplémentaire (Q) définit ledit stade prédéterminé (P) de ladite instruction de déplacement en accord avec une distance de déplacement qui reste avant que ledit outil atteigne ledit point de destination (P1).

3. Un appareil selon la revendication 1, dans lequel ledit code supplémentaire (Q) définit ledit stade prédéterminé (P) de ladite instruction de déplacement en accord avec un temps qui reste avant l'achèvement de ladite instruction de déplacement.

4. Un appareil selon la revendication 2, dans lequel ledit bloc présente le format de bloc suivant :
Naa G91 G00 Xxx Zzz Qnn Mmm
où Naa est l'adresse du bloc, G91 et G00 sont des codes G pour positionner l'outil, Xxx et Zzz constituent un mot de dimension associé à G00, Qnn est le code supplémentaire incluant ladite distance de déplacement nn qui reste, et Mmm est un code M, S, T ou B définissant l'instruction de fonctionnement ; aa, xx, zz, nn et mm étant des valeurs entières.

5. Un appareil selon une revendication précédente quelconque, dans lequel ladite instruction de fonctionnement (M) est une instruction de refroidissement (M07).
